# EUROPÄISCHE PATENTSCHRIFT

(11) **EP 1 678 094 B1**
(45) Veröffentlichungstag und Bekanntmachung des Hinweises auf die Patenterteilung: **02.01.2008**
(21) Anmeldenummer: 04790129.3
(22) Anmeldetag: 05.10.2004
(51) Int. Cl.: C03C 25/10, C08F 290/06, C08G 18/48, C08G 18/67, C08G 18/75, C09D 175/16

(54) **STRAHLUNGSHÄRTBARES BESCHICHTUNGSMITTEL, ENTHALTEND EIN ALIPHATISCHES URETHAN(METH)ACRYLAT**
RADIATION-HARDENABLE COATING AGENT CONTAINING ALIPHATIC URETHANE(METH)ACRYLATE
AGENT DE REVETEMENT DURCISSABLE PAR RAYONNEMENT, CONTENANT UN (METH)ACRYLATE D'URETHANE ALIPHATIQUE

(30) Priorität: 06.10.2003 DE 10346327
(43) Veröffentlichungstag der Anmeldung: 12.07.2006
(73) Patentinhaber: BASF Aktiengesellschaft, 67056 Ludwigshafen (DE)
(72) Erfinder: SCHWALM, Reinhold, 67157 Wachenheim (DE); ENENKEL, Peter, 67258 Hessheim (DE); LARBIG, Harald, 67059 Ludwigshafen (DE); HEISCHKEL, Yvonne, 68199 Mannheim (DE); BIEHLER, Manfred, 76831 Ilbesheim (DE)
(74) Vertreter: Reitstötter - Kinzebach
(86) Internationale Anmeldenummer: PCT/EP2004/011115
(87) Internationale Veröffentlichungsnummer: WO 2005/035460

(56) Entgegenhaltungen:
- DE-A1- 4 440 819
- US-A1- 2002 058 146
- US-A1- 2003 100 627
- US-A1- 2003 149 127

## Beschreibung

Die vorliegende Erfindung betrifft ein strahlungshärtbares Beschichtungsmittel, enthaltend wenigstens ein aliphatisches Urethan(meth)acrylat mit zwei ethylenisch ungesättigten Doppelbindungen pro Molekül, das wenigstens ein Polytetrahydrofurandiol eingebaut enthält, und wenigstens einen monoethylenisch ungesättigten Reaktivverdünner. Die Erfindung betrifft weiterhin ein Verfahren zur Herstellung eines beschichteten Substrats unter Einsatz eines solchen strahlungshärtbaren Beschichtungsmittels sowie die nach diesem Verfahren erhaltenen beschichteten Substrate.

Strahlungshärtbare Zusammensetzungen haben in der Technik eine breite Anwendung, insbesondere als hochwertige Beschichtungsmaterialien für Oberflächen erlangt. Unter strahlungshärtbaren Zusammensetzungen versteht man Zubereitungen, die ethylenisch ungesättigte Polymere oder Prepolymere enthalten, und die, gegebenenfalls nach einem physikalischen Trocknungsschritt, durch Einwirkung energiereicher Strahlung, beispielsweise durch Bestrahlung mit UV-Licht oder durch Bestrahlung mit energiereichen Elektronen (Elektronenstrahlung), ausgehärtet werden.

Um den hohen Anforderungen der Verbraucher an Oberflächenbeschichtungen im Innen- und Außenbereich gerecht zu werden, müssen strahlungshärtbare Beschichtungsmittel ein komplexes Eigenschaftsprofil aufweisen. Dazu zählt zum einen eine hohe Oberflächenhärte und eine gute Chemikalienresistenz. Zudem besteht der Wunsch nach Beschichtungen, die eine hohe Kratzfestigkeit aufweisen, damit die Beschichtung beispielsweise beim Reinigen nicht beschädigt wird und ihren Glanz verliert. Speziell für Anwendungen im Außenbereich ist zudem eine hohe Beständigkeit gegen Witterungseinflüsse, insbesondere eine geringe Vergilbungsneigung und eine hohe Hydrolysestabilität erforderlich. Dies erfordert zum einen den Einsatz von Lackbausteinen, d. h. Komponenten der strahlungshärtbaren Beschichtungsmittel, welche photochemisch, hydrolytisch und oxidativ stabil sind. Des Weiteren sollen diese auch gegenüber zusätzlichen Komponenten, wie UV-Absorbern und Radikalfängern, verträglich sein und dennoch zuverlässig aushärten. Grundsätzlich stellt sich bei den strahlungshärtbaren Zusammensetzungen des Stands der Technik das Problem, dass durch Auswahl und Abstimmung der Komponenten (strahlungshärtbares Polymer und Reaktiwerdünner) einzelne Anwendungseigenschaften zwar verbessert werden können, dies jedoch in der Regel zu Lasten anderer Anwendungseigenschaften geht. Es besteht daher weiterhin Bedarf an strahlungshärtbaren Beschichtungsmitteln, die ein möglichst optimales Eigenschaftsprofil, insbesondere für Außenanwendungen, aufweisen.

A. Valet beschreibt im Polymers Paint Color Journal, Band 182 (1992), Seiten 408-411 den Einsatz von UV-Absorbern und Radikelfängern In strahlungshärtbaren Beschichtungsmitteln für Außenanwendungen zur Verbesserung der Witterungsstabilltät.

Die US 4,153,778 beschreibt Urethanacrylatollgomere, die ein Polytetramethylenoxiddiol ein polymerisiert enthalten und deren Verwendung als Beschichtungen, Bindemittel und Klebstoffe, die weitere Komponenten, wie z. B. ethylenisch ungesättigte Monomere, enthalten können.

Die JP-A-62054710 beschreibt eine Urethanacrylatzusammensetzung, die ein Urethanacrylat mit einer Polyalkoholgruppe in der Polymerkette und ein weiteres polymerlslerbares Monomer, wie Styrol oder Methylmethacrylat, enthält.

Die JP-A-01216837 beschreibt Filmbeschichtungen mit guter Kratzfestigkeit, Stoßfestigkeit und Abriebbeständigkeit, zu deren Herstellung ein Urethanacrylatoligomer auf Basis eines Diols mit einem zahlenmittleren Molekulargewicht von 200 bis 4000 eingesetzt wird.

Die US 4,129,667 beschreibt strahlungshärtbare Beschichtungsmittel, umfassend ein Urethanacrylatoligomer und einen UV-Absorber. Die eingesetzten Urethanacrylate können dabei von Polytetrahydrofuran abgeleitete Wiederholungseinheiten aufweisen. Zusätzlich können die Beschichtungsmittel noch mit dem Urethanacrylat copolymerisierbare Monomere, wie Monoester, Diester und höhere Ester der Acrylsäure und Methacrylsäure aufweisen.

Die US 4,135,007 hat einen der US 4,129,667 vergleichbaren Offenbarungsgehalt.

Die DE-A-199 40 313 beschreibt ein Verfahren zur Herstellung von kratzfesten und witterungsstabilen Beschichtungen, bei dem man ein flüssiges, UV-härtbares Beschichtungsmittel auf der Basis von aliphatischen Urethan(meth)acrylatprepolymeren auf ein zu beschichtendes Substrat aufbringt und die noch flüssige Beschichtung anschließend unter weitgehendem Ausschluss von Sauerstoff durch UV-Strahlung aushärtet.

Die DE-A-197 39 970 beschreibt strahlungshärtbare Zusammensetzungen, die wenigstens ein aliphatisches Urethangruppen enthaltendes Prepolymer und wenigstens einen monofunktionellen Ester einer α,β-ethylenisch ungesättigten Carbonsäure mit einem monofunktionellen Alkanol, das wenigstens einen gesättigten 5- oder 6-gliedrigen Carbocyclus oder einen entsprechenden Heterocyclus mit einem oder zwei Sauerstoffatomen im Ring als Strukturelement aufweist, enthält.

Die US 20031100627 beschreibt strahlungshärtbare Zusammensetzungen, die ein Oligomer sowie einen Reaktiwerdünner enthalten. Bei dem Oligomer handelt es sich um ein Urethanacrylat, bei dem das Grundgerüst eine Polytetramethylenglycol-Einheit aufweist. Der Reaktiwerdünner enthält als Strukturelement eine Furanylgruppe, die über mindestens eine Estergruppe an eine Acrylatgruppe gebunden ist.

Der vorliegenden Erfindung liegt die Aufgabe zu Grunde, flexible strahlungshärtbare Beschichtungsmittel, die sich für Außenanwendungen eignen, zur Verfügung zu stellen. Diese sollen sich durch gute ariwendungstechnlsche Eigenschaften, wie gute mechanische Eigenschaften, geringen Geruch und hohe Reaktivität auszeichnen. Insbesondere sollen sie bei einer guten Beständigkeit, Insbesondere einer hohen Kratzbeständigkeit, eine hohe Flexibilität und geringe Vergilbungsneigung aufweisen.

Demgemäß wurde ein strahlungshärtbares Beschichtungsmittel gefunden, enthaltend
a) wenigstens ein aliphatisches Urethan(meth)acrylat mit zwei ethylenisch ungesättigten Doppelbindungen pro Molekül, das wenigstens ein Polytetrahydrofurandiol mit einem zahlenmittleren Molekulargewicht Mₙ von mindestens 500 g/mol eingebaut enthält, und
b) wenigstens einen monoethylenisch ungesättigten Reaktivverdünner, der wenigstens einen aliphatischen Heterocyclus als Strukturelement aufweist,
worin die Komponente b) eine Verbindungen der allgemeinen Formel I 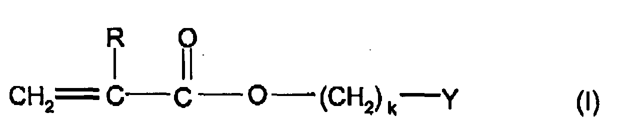 ist, worin
- R: ausgewählt ist unter H und CH3,
- k: eine Zahl von 0 bis 4 ist, und
- Y: für einen 5- oder 6-gliedrigen, gesättigten Heterocyclus mit einem oder zwei Sauerstoffatomen steht, wobei der Heterocyclus gegebenenfalls mit C1-C4-Alkyl substituiert ist.

Erfindungsgemäß ist das aliphatische Urethan(meth)acrylat frei von aromatischen Strukturelementen, wie Phenylen oder Naphthylen oder substituierten Derivaten davon. Komponente b) enthält keine aliphatischen Carbocyclen,

In einer bevorzugten Ausführungsform enthalten die erfindungsgemäßen strahlungshärtbaren Beschichtungsmittel zusätzlich als Komponente c) einen di- oder polyfunktionellen Ester einer α,β-ethylenisch ungesättigten Carbonsäure mit einem aliphatischen Di- oder Polyol.

In der Regel enthalten die erfindungsgemäßen Zusammensetzungen 20 bis 90 Gew.-%, bevorzugt 30 bis 80 Gew.-% und insbesondere 40 bis 70 Gew.-% der Komponente a), 10 bis 80 Gew.-%, vorzugsweise 20 bis 60 Gew.-% und insbesondere 30 bis 50 Gew.-% der Komponente b), 0 bis 50 Gew.-% und bevorzugt 0 bis 40 Gew.-% der Komponente c) und bis zu 50 Gew.-%, bezogen auf das Gesamtgewicht der Komponenten a), b) und c), übliche Hilfsmittel, mit der Maßgabe, dass die Gewichtsmengen der Komponenten a), b) und c) sich zu 100 Gew.-% addieren. In der Regel liegt das Gewicht der Komponenten b) und c) im Bereich von 10 bis 80 Gew.-%, vorzugsweise 20 bis 70 Gew-% und insbesondere 30 bis 60 Gew.-%, jeweils bezogen auf das Gesamtgewicht a) + b) + c).

Je nach gewünschtern Eigenschaftsprofil enthalten die erfindungsgemäßen Zusammensetzungen Komponente b) und Komponente c) oder ausschließlich Komponente b). Wird eine hohe Beschichtungshärte gewünscht, enthält die erfindungsgemäße Zubereitung vorzugsweise Komponente b) und Komponente c). Wird hingegen mehr Wert auf eine hohe Flexibilität gelegt, kann auf Komponente c) verzichtet werden. Zudem wird mit zunehmendem Gehalt an Komponente c) die Viskosität der erfindungsgemäßen Zubereitungen verbessert. Im ersten Fall liegt das Verhältnis von Komponente b) zu Komponente c) vorzugsweise im Bereich von 20:1 bis 1:1 und insbesondere im Bereich von 10:1 bis 1,5:1.

In der Regel ist die Komponente a) im Wesentlichen aus einem oder mehreren aliphatischen Strukturelementen, Urethangruppen und zwei ethylenisch ungesättigten Struktureinheiten aufgebaut. Aliphatische Strukturelemente umfassen sowohl Alkylengruppen, vorzugsweise mit 4 bis 10 C-Atomen, als auch Cycloalkylengruppen mit vorzugsweise 6 bis 20 C-Atomen. Sowohl die Alkylen- als auch die Cycloalkylengruppen können mit C₁-C₄-Alkyl, insbesondere mit Methyl, ein- oder mehrfach substituiert sein sowie ein oder mehrere nicht benachbarte Sauerstoffatome enthalten. Die aliphatischen Strukturelemente sind gegebenenfalls über quartäre oder tertiäre Kohlenstoffatome, über Harnstoffgruppen, Biureth-, Urethdion-, Allophanat-, Cyanurat-, Urethan-, Ester- oder Amidgruppen oder über Ethersauerstoff oder Aminstickstoff miteinander verbunden. Ferner weist die Komponente a) erfindungsgemäß zwei ethylenisch ungesättigte Strukturelemente auf. Hierbei handelt es sich vorzugsweise um Vinyl- oder Allylgruppen, die auch mit C₁-C₄-Alkyl, insbesondere Methyl substituiert sein können, und die sich insbesondere von α,β-ethylenisch ungesättigten Carbonsäuren bzw. deren Amiden ableiten. Besonders bevorzugte ethylenisch ungesättigte Struktureinheiten sind Acryloyl- und Methacryloylgruppen wie Acrylamido und Methacrylamido und insbesondere Acryloxy und Methacryloxy.

Besonders bevorzugt sind Komponenten a), in denen die aliphatischen Strukturelemente über Cyanurat-, Biureth- und/oder Urethangruppen miteinander verknüpft sind und die als ethylenisch ungesättigte Strukturelemente Acryloxygruppen aufweisen.

Das zahlenmittlere Molekulargewicht Mn der Urethan(meth)acrylate a) liegt vorzugsweise im Bereich von 750 bis 10000, besonders bevorzugt von 1000 bis 5000.

Derartige ethylenisch ungesättigte, Urethangruppen enthaltende Prepolymere sind dem Fachmann grundsätzlich bekannt. Bevorzugte, Harnstoffgruppen-freie aliphatische Urethane sind beispielsweise dadurch erhältlich, dass man
i) wenigstens eine aliphatische Verbindung oder ein aliphatisches Prepolymer mit wenigstens zwei Isocyanatgruppen (Komponente a1) mit
ii) wenigstens einer Verbindung, die wenigstens eine reaktive OH-Gruppe und wenigstens eine ethylenisch ungesättigte Doppelbindung aufweist (Komponente a2),
iii) wenigstens einem Polytetrahydrofurandiol (Polytetramethylenglykol, Polytetramethylenoxid) mit einem zahlenmittleren Molekulargewicht Mₙ von mindestens 500 g/mol und gegebenenfalls
iv) einer oder mehreren aliphatischen Verbindungen mit wenigstens einer reaktiven OH-Gruppe (Komponente a4) umsetzt.

Hierbei ist das Verhältnis der Summe der OH-Gruppen aus den Komponenten a2, a3 und a4 zu den NCO-Gruppen aus der Komponente a1 vorzugsweise ≥ 1, so dass das erhaltene Urethan(meth)acrylat in der Regel keine NCO-Gruppen enthält.

Als Komponente a1 kommen aliphatische Diisocyanate, oligomere Addukte aliphatischer Diisocyanate an polyfunktionelle Alkohole mit vorzugsweise 2 bis 20 C-Atomen, sowie die Urethdione, lsocyanurate, Biurethe und Allophanate aliphatischer Diisocyanate in Frage. Beispiele für geeignete aliphatische Diisocyanate sind Tetramethylendiisocyanat, Hexamethylendiisocyanat, Octamethylendiisocyanat, Decamethylendiisocyanat, Dodecamethylendiisocyanat, Tetradecamethylendiisocyanat, 1,6-Diisocyanato-2,2,4-trimethylhexan, 1,6-Diisocyanato-2,2,4,4-tetramethylhexan, 1,2-, 1,3- oder 1,4-Diisocyanatocyclohexan, 4,4'-Di(isocyanatocyclohexyl)methan, 1-Isocyanato-3,3,5-trimethyl-5-(isocyanatomethyl)cyclohexan (= isophorondiisocyanat) und 2,4- oder 2,6-Diisocyanato-1-methylcyclohexan. Geeignete polyfunktionelle Alkohole umfassen aliphatische Di- oder Polyole mit vorzugsweise 2 bis 20 C-Atomen wie Ethylenglykol, Diethylenglykol, Triethylenglykol, 1,2-Propylenglykol, 1,3-Propylenglykol, Dipropylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, Dimethylolcyclohexan, Glycerin, Trimethylolethan, Trimethylolpropan, Trimethylolbutan, Pentaerythrit, Ditrimethylolpropan, Erythrit und Sorbit. Die Komponente a1 kann auch unter den Trimerisierungsprodukten der vorgenannten aliphatischen Diisocyanate ausgewählt sein, d. h. den Biurethen und den Isocyanuraten, und den Addukten der vorgenannten aliphatischen Diisocyanate an einen der vorgenannten polyfunktionellen aliphatischen Alkohole mit wenigstens drei reaktiven OH-Gruppen. Dazu zählt z. B. das Isocyanurat und/oder das Biureth des Hexamethylendiisocyanats. Besonders bevorzugt als Komponente a1 sind Isophorondiisocyanat und Isophorondiisocyanat-haltige Gemische.

Als Komponente a2 kommen beispielsweise die Ester ethylenisch ungesättigter Carbonsäuren mit einem der vorgenannten aliphatischen Polyole sowie die Vinyl-, Allyl- und Methallylether der vorgenannten Polyole in Frage, sofern sie noch eine, gegenüber Isocyanat reaktive OH-Gruppe enthalten. Ferner können auch die Amide ethylenisch ungesättigeter Carbonsäuren mit Aminoalkoholen eingesetzt werden. Als Komponente a2 werden die Ester der Acrylsäure und der Methacrylsäure wie Hydroxyethyl(meth)acrylat, Hydroxypropyl(meth)acrylat, 1,4-Butandiolmono(meth)acrylat, Neopentylglykolmono(meth)acrylat, Trimethylolpropandi(meth)acrylat, Pentaerythritdi- und -tri(meth)acrylat bevorzugt. Besonders bevorzugt ist die Komponente a2 ausgewählt unter Hydroxypropylacrylat und Butandiolmonoacrylat und ist insbesondere Hydroxyethylacrylat.

Bei der Komponente a3) handelt es sich bevorzugt um ein Polymerisat mit einem zahlenmittleren Molekulargewicht im Bereich von etwa 500 bis 4000, bevorzugt 600 bis 3000, insbesondere 750 bis 2000. Geeignete Polytetrahydrofurane können durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt. Bevorzugt handelt es sich um streng lineare Polytetrahydrofurane.

Geeignete zusätzlich einsetzbare aliphatische Verbindungen mit wenigstens einer reaktiven OH-Gruppe (Komponente a4) sind beispielsweise Alkanole mit vorzugsweise 1 bis 10 C-Atomen, Cycloalkanole mit vorzugsweise 5 bis 10 C-Atomen, sowie Monoalkylether von Polyalkylenglykolen. Beispiele für geeignete Alkanole sind Methanol, Ethanol, n- und Isopropanol, n-, 2-, iso- und tert.-Butanol, Amylalkohol, Isoamylalkohol, n-Hexanol, n-Octenol, 2-Ethylhexanol und Decanol. Geeignete Cycloalkanole umfassen z. B. Cyclopentanol und Cyclohexanol, die gegebenenfalls ein- oder mehrfach mit C₁-C₄-Alkyl z. B. Methyl, Ethyl, n-Propyl, isopropyl, n-Butyl, 2-Butyl, Isobutyl oder tert.-Butyl, insbesondere mit Methyl substituiert sind. Beispiele für Monoalkylether von Polyalkylenglykolen sind die Mona-C₁-C₄-alkylether und insbesondere die Methylether des Ethylenglykols, des Diethylenglykols oder des Triethylenglykols.

Die Herstellung der Komponente a) erfolgt in bekannter Weise dadurch, dass man die Komponente a1 mit den Komponenten a2 und a3 und gegebenenfalls a4 bei Temperaturen vorzugsweise im Bereich von 0 bis 120 °C und insbesondere im Bereich von 20 bis 100 °C zur Reaktion bringt.

Zur Beschleunigung der Umsetzung können Katalysatoren, wie sie z. B. in Houben-Weil, Methoden der Organischen Chemie, Bd. XIV/2, Thieme-Veriag, Stuttgart 1963, S. 60f. sowie Ullmanns Enzyklopädie der Technischen Chemie, 4. Aufl., Bd 19 (1981), S. 306 beschrieben sind, eingesetzt werden. Bevorzugt sind zinnhaltige Katalysatoren wie Dibutylzinndilaurat, Zinn(II)octoat oder Dibutylzinndimethoxid. Im Allgemeinen werden solche Katalysatoren in einer Menge von 0,001 bis 2,5 Gew.-%, bevorzugt von 0,005 bis 1,5 Gew.%, bezogen auf die Gesamtmenge der Reaktanden, eingesetzt.

Zur Stabilisierung der radikalisch polymerisierbaren Verbindungen (Komponente a2) werden vorzugsweise 0,001 bis 2 Gew.%, insbesondere 0,005 bis 1,0 Gew.-% Polymerisationsinhibitoren der Reaktion zugesetzt. Dabei handelt es sich um die üblichen, zur Behinderung der radikalischen Polymerisation geeigneten Verbindungen, z. B. um Hydrochinone oder Hydrochinonmonoalkylether, 2,6-Di-tert.-butylphenole, wie 2,6-Di-tert.-butylkresol, Nitrosamine, Phenothiazine oder Phosphorigsäureester. Die Umsetzung kann sowohl lösungsmittelfrei als auch unter Zusatz von Lösungsmitteln durchgeführt werden. Als Lösungsmittel kommen inerte Lösungsmittel, z. B. Aceton, Methylethylketon, Tetrahydrofuran, Dichlormethan, Toluol, C₁-C₄-Alkylester der Essigsäure wie Ethylacetat oder Butylacetat in Frage. Bevorzugt wird die Umsetzung lösungsmittelfrei oder in wenigstens einem Teil der Komponente b) als Lösungsmittel durchgeführt. Beispiele für geeignete Verbindungen der Komponente b) umfassen Verbindungen der allgemeinen Formel I 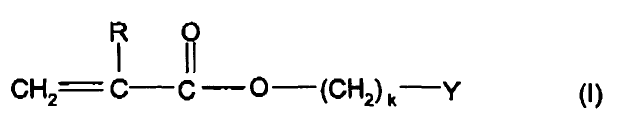 worin
- R: ausgewählt ist unter H und CH₃ und Insbesondere für H steht,
- k: eine Zahl von 0 bis 4 und insbesondere 0 oder 1 ist, und
- Y: für einen 5- oder 6-gliedrigen, gesättigten Heterocyclus mit einem oder zwei Sauerstoffatomen steht, wobei der Heterocyclus gegebenenfalls mit C₁-C₄-Alkyl, z. B. Methyl, Ethyl, n-Propyl, Isopropyl, n-Butyl, 2-Butyl, Isobutyl oder tert.-Butyl, substituiert ist.

Vorzugsweise leitet sich der 5- oder 6-gliedrige, gesättigte Heterocyclus von Tetrahydrofuran, Tetrahydropyran, 1,3-Dioxolan, 1,3- oder 1,4-Dioxan ab.

Besonders bevorzugt ist die Komponente b) ausgewählt unter 4-Tetrahydropyranylacrylat, 2-Tetrahydropyranylmethylacrylat, Tetrahydrofurfurylacfylat und Mischungen davon.

Darüber hinaus können die strahlungshärtbaren Beschichtungsmittel in den oben angegebenen Mengen einen di- oder polyfunktionellen Ester einer α,β-ethylenisch ungesättigten Carbonsäure mit einem aliphatischen Di- oder Polyol enthalten (Komponente c). Geeignet sind beispielsweise die Veresterungsprodukte der oben im Zusammenhang mit Komponente a1 aufgeführten Di- oder Polyole. Bevorzugt werden die Ester der Acrylsäure und der Methacrylsäure, insbesondere die Diester von Diolen. Vorzugsweise enthalten die Diole bzw. die Polyole außer den OH-Funktionen keine weiteren Heteroatome. Beispiele für geeignete Komponenten c) umfassen Ethylenglykol-di(meth)acrylat, Propylengiykoldi(meth)acrylat, Butylenglykoldi(meth)acrylat, 1,6-Hexandioldi(meth)acrylat, Diethylenglykoldi(meth)acrylat, Triethylenglykol-di(meth)acrylat, Dipropylenglykoldi(meth)aclylat, Tripropylenglykoldi(meth)acrylat, 1,4-Cyclohexandioldi(meth)acryiat und 1,4-Bis(hydroxymethyl)cyciohexandi(meth)acrylat, ferner Trimethylol-ethantri(meth)acrylat, Trimethylolpropantri(meth)acrylat und Pentaerythrit-tetra(meth)acrylat. Besonders bevorzugte Komponenten c) sind Butandioldiacrylat, Hexandioldiacrylat, 1,4-Cyclohexandioldiacrylat und 1,4-Bis(hydroxymethyl)cyclohexandiacrylat.

Ferner können die erfindungsgemäßen, strahlungshärtbaren Beschichtungsmittel je nach Verwendungszweck bis zu 50 Gew.-% (ohne Pigmente und Füllstoffe) übliche Hilfsmittel wie Photoinitiatoren, Radikalfänger, Verdicker, Verlaufshilfsmittel, Entschäumer, UV-Stabilisatoren, Gleitmittel etc. enthalten.

Vorzugsweise enthalten die erfindungsgemäßen Beschichtungsmittel, bezogen auf das Gesamtgewicht der Komponenten a), b) und c) zusätzlich:
d) 0 bis 10 Gew.-% wenigstens eines Photoinitiators,
e) 0 bis 5 Gew.-% wenigstens eines UV-Absorbers,
f) 0 bis 5 Gew.-% wenigstens eines Radikalfängers und
g) 0 bis 10 Gew-% für Beschichtungsmittel übliche Additive.

Die erfindungsgemäßen Beschichtungsmittel können zusätzlich, bezogen auf das Gesamtgewicht der Komponenten a), b) und c) 0 bis 200 Gew.-%, bevorzugt 0 bis 100 Gew.% wenigstens eines Zuschlags enthalten, der ausgewählt ist unter Pigmenten und Füllstoffen. Eine übliche Einsatzmenge für Pigmente liegt beispielsweise in einem Bereich von 2 bis 40 Gew.-%. Eine übliche Einsatzmenge für Füllstoffe liegt beispielsweise in einem Bereich von 1 bis 30 Gew.-%.

Geeignete Stabilisatoren umfassen typische UV-Absorber wie Oxanilide, Triazine und Benzotriazol (letztere erhältlich als Tinuvin®-Marken der Ciba-Spezialitätenchemie) und Benzophenone. Diese können alleine oder zusammen mit geeigneten Radikalfängern, beispielsweise sterisch gehinderten Aminen wie 2,2,6,6-Tetramethylpiperidin, 2,6-Di-tert.-butylpiperidin oder deren Derivate, z. B. Bis-(2,2,6,6-tetramethyl-4-piperidyl)sebacinat eingesetzt werden. Stabilisatoren werden üblicherweise in Mengen von 0,1 bis 5,0 Gew.-% und vorzugsweise 0,5 bis 3,5 Gew.-%, bezogen auf die in der Zubereitung enthaltenen Komponenten a) bis c) eingesetzt.

Sofern die Aushärtung mittels UV-Strahlung erfolgt, enthalten die erfindungsgemäßen Zubereitungen wenigstens einen Photoinitiator, der die Polymerisation ethylenisch ungesättigter Doppelbindungen initiieren kann. Hierzu zählen Benzophenon und Benzophenonderivate, wie 4-Phenylbenzophenon und 4-Chlorobenzophenon, Michelers Keton, Anthron, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie methyl-, Ethyl- und Butylbenzoinether, Benzilketale, wie Benzildimethylketal, 2-Methyl-1-[4-(methylthio)phenyl]-2-morpholinopropan-1-on, Anthrachinon und seine Derivate wie b-Methylanthrachinon und tert.-Butylanthrachinon, Acylphosphinoxide, wie 2,4,6-Trimethylbenzoyldiphenylphosphinoxid, Ethyl-2,4,6-trimethylbenzoylphenylphosphinat und Bisacylphosphinoxide. Die vorgenannten Photoinitiatoren werden, sofern erforderlich, in Mengen von 0,05 bis 20 Gew.-%, vorzugsweise 0,1 bis 10 Gew.-% und insbesondere 0,1 bis 5 Gew.-%, bezogen auf die polymerisierbaren Komponenten a), b) und c) der erfindungsgemäßen Zubereitungen eingesetzt. Sofern die erfindungsgemäße Zubereitung mittels Elektronenstrahlung gehärtet wird, kann auf Photoinitiatoren verzichtet werden. Bei Anwendung der Elektronenstrahlhärtung können die erfindungsgemäßen Zubereitungen auch farbige Pigmente enthalten.

Vorzugsweise enthalten die erfindungsgemäßen Zubereitungen keine Pigmente oder Füllstoffe. Ferner sind die erfindungsgemäßen Zubereitungen vorzugsweise frei von nicht-polymerisierbaren inerten Lösungsmitteln.

Die Herstellung der erfindungsgemäßen Zubereitungen erfolgt durch Abmischen der Komponenten in bekannter Weise. Das Abmischen kann bei Raumtemperatur oder erhöhter Temperatur bis 100 °C, beispielsweise mittels üblichen Mischvorrichtungen wie Rührkesseln oder statischen Mischern erfolgen.

Die erfindungsgemäßen Zubereitungen erweisen sich besonders geeignet zum Beschichten von Substraten wie Holz, Papier, Kunststoffoberflächen, Leder und insbesondere für Metalle oder beschichtete Metalle.

Demnach betrifft die vorliegende Erfindung auch ein Verfahren zum Beschichten von Substraten, insbesondere von Metallen oder beschichteten Metallen, sowie die durch dieses Verfahren erhältlichen beschichteten Substrate. Die Beschichtung der Substrate erfolgt in der Regel dadurch, dass man wenigstens eine erfindungsgemäße, strahlungshärtbare Zubereitung auf das zu beschichtende Substrat in der gewünschten Stärke aufbringt, gegebenenfalls vorhandenes Lösungsmittel entfernt und anschließend durch Einwirkung energiereicher Strahlung wie UV-Strahlung oder Elektronenstrahlung aushärtet. Dieser Vorgang kann, sofern gewünscht, ein- oder mehrfach wiederholt werden. Das Aufbringen der strahlungshärtbaren Zubereitungen auf das Substrat erfolgt in bekannter Weise, z. B. durch Spritzen, Spachteln, Rakeln, Bürsten, Rollen oder Gießen. Die Beschichtungsstärke liegt in der Regel im Bereich von 3 bis 500 g/m2 und vorzugsweise 10 bis 200 g/m2 entsprechend Nassfilmdicken von etwa 3 bis 500 mm, vorzugsweise 10 bis 200 mm. Das Aufbringen kann sowohl bei Raumtemperatur als auch bei erhöhter Temperatur, vorzugsweise jedoch nicht oberhalb 100 °C erfolgen. Anschließend werden die Beschichtungen durch Einwirkung der energiereichen Strahlung, vorzugsweise UV-Strahlung der Wellenlänge 250 bis 400 nm oder durch Bestrahlung mit energiereichen Elektronen (Elektronenstrahlung; 150 bis 300 keV) gehärtet. Als UV-Quellen dienen beispielsweise Hochdruckquecksilberdampflampen, z. B. CK- oder CK1-Strahler der Fa. IST. Die üblicherweise zur Vernetzung ausreichende Strahlungsdosis liegt im Bereich von 80 bis 3000 mJ/cm².

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Die erfindungsgemäßen Zubereitungen zeichnen sich durch eine hohe Reaktivität, gekennzeichnet durch einen Wert > 10 m/min aus (die Reaktivität in m/min entspricht der Geschwindigkeit, mit der ein mit einer strahlungshärtbaren Zubereitung in einer Nassfilmstärke von 100 mm behandeltes Substrat an einer UV-Quelle mit einer Leistung von 120 W/cm in einem Abstand von 10 cm vorbeigeführt werden kann, so dass noch vollständige Aushärtung stattfindet). Gleichzeitig können hohe Härten, charakterisiert durch eine Pendeldämpfung (analog DIN 53157, s. u.) > 8 sec. und hohe Flexibilitäten, charakterisiert durch Erichsen-Tiefungen > 5 mm (s. u.) realisiert werden, ohne dass Abstriche in der Viskosität und der Reaktivität zu verzeichnen sind. Zudem zeichnen sich die aus den erfindungsgemäßen Zubereitungen erhältlichen Beschichtungen durch eine erhöhte Kratzfestigkeit aus, wie sie beispielsweise durch Scheuertests bestimmt werden kann.

Die im Folgenden angegebenen Beispiele sollen die vorliegende Erfindung erläutern, ohne sie jedoch einzuschränken.

### Beispiele

### A) Herstellung von Polyurethanen, Lacken und Beschichtungen

### Beispiel 1:

### Herstellung eines Polyurethanharzes auf Basis eines Polytetrahydrofurandiols (Mₙ = 1000 g/mol)

In einem Rundkolben werden 450 Teile Polytetrahydrofurandiol (Mₙ = 1000 g/mol), 105 Teile Hydroxyethylacrylat, 250 Teile Trimethylolpropanformalmonoacrylat, 0,4 Teile Hydrochinonmonomethylether und 0,1 Teite Dibutylzinndilaurat vorgelegt und auf 80 °C aufgeheizt. Dann wurden 200 Teile Isophorondiisocyanat innerhalb einer halben Stunde zugetropft. Man lässt weitere 5 h reagieren, bis der Isocyanatgruppengehalt des Gemischs (NCO-Wert) auf 0 abgefallen ist. Das erhaltene Harz wird über einen 50 µm Filter filtriert und abgefüllt.

### Beispiel 2:

### Herstellung eines Polyurethanharzes auf Basis eines Polytetrahydrofurandiols (Mₙ = 2000 g/mol)

Es wird analog der Herstellungsvorschrift aus Beispiel 1 verfahren, wobei ein Polytetrahydrofurandiol mit einem Molekulargewicht von 2000 g/mol eingesetzt wird.

### Beispiel 3:

### Herstellung eines Polyurethanharzes auf Basis eines Polytetrahydrofurandiols (Mₙ = 650 g/mol)

Es wird analog der Herstellungsvorschrift aus Beispiel 1 verfahren, wobei ein Polytetrahydrofurandiol mit einem Molekulargewicht von 650 g/mol eingesetzt wird.

### Vergleichsbeispiele 1 und 2:

Herstellung von Polyurethanharzen gemäß US 4,135,007

Es wird analog der allgemeinen Herstellungsvorschrift aus Beispiel 1 verfahren, wobei jedoch der Reaktivverdünner Trimethylolpropanformalmonoacrylat durch Ethylhexylacrylat (V1) bzw. Cyclohexylmethacrylat (V2) ersetzt wird.

### Vergleichsbeispiel 3:

### Herstellung eines Polyurethanharzes auf Basis eines Polyesterdiols

Es wird analog der Herstellungsvorschrift aus Beispiel 1 verfahren, wobei jedoch das Polytetrahydrofurandiol durch ein Polyesterdiol aus Adipinsäure und Butandiol-1,4 mit einem Molekulargewicht (Mₙ) von 1000 g/mol ersetzt wird.

### Herstellung von Lacken:

Zu je 96 Teilen Harz der Beispiele 1 - 3 bzw. Vergleichsbeispiele 1-3 gibt man 4 Teile des Photoinitiators Darocure 1173 (Fa. Ciba). Die Viskositäten der erhaltenen Lacke sind in der folgenden Tabelle 1 wiedergegeben.

| | Viskosität [Pas] |
|---|---|
| Beispiel 1 | 11 |
| Beispiel 2 | 50 |
| Beispiel 3 | 12 |
| V1 | - |
| V2 | - |
| V3 | 40 |

### Herstellung von Beschichtungen:

Die zuvor beschriebenen Lacke werden mit einem 100 µm Kastenrakel auf eine schwarze Glasplatte sowie auf ein Bonderblech aufgetragen und mit 1320 mJ/cm² belichtet.

### B) Anwendungstechnische Eigenschaften

Die Lacke der Beispiele und der Vergleichsbeispiele wurden dann in den für die jeweilige Prüfmethode beschriebenen Schichtdicken appliziert und gehärtet.

### Messbedingungen:

Pendeldämpfung: (orientiert an DIN 53157)
100 µm Nassfilmdicke, belichtet mit einem Hg-Hochdruckstrahler, 120 W/cm; Objektabstand 10 cm; Bandgeschwindigkeit 2 x 10 m/min; Pendelgerät nach DIN 53157 (König); Angabe in sec.).

Erichsentiefung: (orientiert an DIN 53156)
50 µm Nassfilmdicke mit Spiralrakel; belichtet mit einem Hg-Hochdruckstrahler, 120 W/cm; Objektabstand 10 cm; Bandgeschwindigkeit 2 x 10 m/min; Erichsentiefung nach DIN 53156; Angabe in mm).

Die Beurteilung der Kratzfestigkeit erfolgte in einem Scheuertest, bei dem mit einem Scotch Brite-Gewebe unter einem Gewicht von 750 g 10 Doppelhübe ausgeführt wurden. Der Verkratzungsgrad wurde über die Bestimmung des Glanzabfalls (vor und nach entsprechender Beanspruchung) bestimmt. Je kleiner der Glanzverlust, desto besser die Kratzbeständigkeit.

Die entsprechend den erfindungsgemäßen Beispielen und Vergleichsbeispielen hergestellten Coatings zeigen folgende Eigenschaften:

Alle Lackschichten sind transparent und farblos.

| | Pendeldämpfung | Erichsentiefung | Glanzverlust |
|---|---|---|---|
| Beispiel 1 | 9 s | > 9,5 mm | 15 % |
| Beispiel 2 | 22 s | > 9,5 mm | 33 % |
| Beispiel 3 | 9 s | > 9,5 mm | 25 % |
| V1 | 28 s | 8,9 mm | 54 % |
| V2 | 4 s | > 9,5 mm | 62 % |
| V3 | 4 s | > 9,5 mm | 70 % |

Der Vergleich zeigt, dass man flexible Lacke mit deutlich verbesserter Kratzstabilität erhält.

## Patentansprüche

1. Strahlungshärtbares Beschichtungsmittel, enthaltend
a) wenigstens ein aliphatisches Urethan(meth)acrylat mit zwei ethylenisch ungesättigten Doppelbindungen pro Molekül, das wenigstens ein Polytetrahydrofurandiol mit einem zahlenmittleren Molekulargewicht Mₙ von mindestens 500 g/mol eingebaut enthält, und
b) wenigstens einen monoethylenisch ungesättigten Reaktiwerdünner, der wenigstens einen aliphatischen Heterocyclus als Strukturelement aufweist, worin die Komponente b) eine Verbindung der allgemeinen Formel I 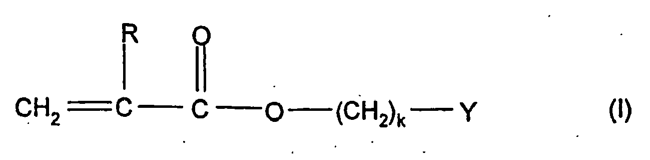 ist, worin
R ausgewählt ist unter H und CH₃,
k eine Zahl von 0 bis 4 ist, und
Y für einen 5- oder 6-gliedrigen gesättigten Heterocyclus mit einem oder zwei Sauerstoffatomen steht, wobei der Heterocyclus gegebenenfalls mit C₁-C₄-Alkyl substituiert ist.

2. Beschichtungsmittel nach Anspruch 1, das zusätzlich wenigstens einen di- oder polyfunktionellen Ester einer α,β-ethylenisch ungesättigten Carbonsäure mit einem Di- oder Polyol (= Komponente c)) enthält.

3. Beschichtungsmittel nach einem der vorhergehenden Ansprüche, enthaltend 20 bis 90 Gew.-% der Komponente a), 10 bis 80 Gew.-% der Komponente b), 0 bis 50 Gew.-% der Komponente c) und bis zu 50 Gew.-%, bezogen auf das Gesamtgewicht der Komponenten a), b) und c), übliche Hilfsmittel, mit der Maßgabe, dass die Gewichtsmengen der Komponenten a), b) und c) sich zu 100 Gew.-% addieren.

4. Beschichtungsmittel nach einem der vorhergehenden Ansprüche, das, bezogen auf das Gesamtgewicht der Komponenten a), b) und c) zusätzlich:
d) 0 bis 10 Gew.% wenigstens eines Photoinitiators,
e) 0 bis 5 Gew.-% wenigstens eines UV-Absorbers,
f) 0 bis 5 Gew.% wenigstens eines Radikalfängers und
g) 0 bis 10 Gew.% für Beschichtungsmittel übliche Additive,
enthält.

5. Beschichtungsmittel nach Anspruch 1, worin die Komponente b) ausgewählt ist unter Trimethylolpropanmonoformalacrylat, Glycerinmonoformalacrylat, 4-Tetrahydropyranytacrylat, 2-Tetrahydropyranylmethylacrylat und Tetrahydrofurfurylacrylat.

6. Beschichtungsmittel nach einem der vorhergehenden Ansprüche, worin die Komponente c) ausgewählt ist unter den Diacrylaten und Dimethacrylaten aliphatischer Diole.

7. Verwendung eines strahlungshärtbaren Beschichtungsmittels, wie in einem der Ansprüche 1. bis, 6 definiert, zum Beschichten von Substraten.

8. Verwendung nach Anspruch 7, wobei man ein Substrat mit einer Oberfläche aus Holz, Kunststoff, Papier, Leder oder Metall einsetzt.

9. Verfahren zur Herstellung eines beschichteten Substrats, wobei man
- ein Beschichtungsmittel nach einem der Ansprüche 1 bis 6 auf die Oberfläche des Substrats aufträgt,
- gegebenenfalls das aufgetragene Beschichtungsmittel bei erhöhten Temperaturen trocknet, und
- das, gegebenenfalls zuvor getrocknete, Beschichtungsmittel durch Bestrahlung mit UV- oder Elektronenstrahlen härtet.

10. Beschichtetes Substrat, erhältlich durch ein Verfahren nach Anspruch 9.

## Claims

1. A radiation-curable coating composition comprising
a) at least one aliphatic urethane (meth)acrylate which has two ethylenically unsaturated double bonds per molecule and comprises at least one polytetrahydrofurandiol having a number average molecular weight Mₙ of at least 500 g/mol in built-in form and
b) at least one monoethylenically unsaturated reactive diluent containing at least one aliphatic heterocycle as structural element, wherein the component b) is a compound of the formula I 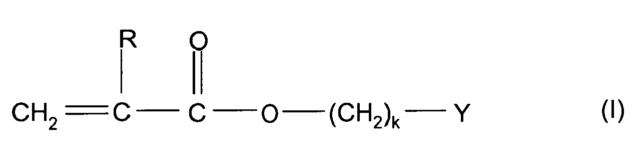 where
R is selected from among H and CH₃,
k is from 0 to 4, and
Y is a 5- or 6-membered, saturated heterocycle containing one or two oxygen atoms, with the heterocycle being able to be optionally substituted by C₁-C₄-alkyl.

2. The coating composition according to claim 1 which further comprises a bifunctional or polyfunctional ester of an α,β-ethylenically unsaturated carboxylic acid with a diol or polyol (= component c)).

3. The coating composition according to either of the preceding claims comprising from 20 to 90% by weight of the component a), from 10 to 80% by weight of the component b), from 0 to 50% by weight of the component c) and up to 50% by weight, based on the total weight of the components a), b) and c), of customary auxiliaries, with the proviso that the percentages by weight of the components a), b) and c) add up to 100% by weight.

4. The coating composition according to any of the preceding claims which, based on the total weight of the components a), b) and c), further comprises:
d) from 0 to 10% by weight of at least one photoinitiator,
e) from 0 to 5% by weight of at least one UV absorber,
f) from 0 to 5% by weight of at least one free-radical scavenger and
g) from 0 to 10% by weight of additives customary for coating compositions.

5. The coating composition according to claim 1, wherein the component b) is selected from among trimethylolpropane monoformal acrylate, glycerol monoformal acrylate, 4-tetrahydropyranyl acrylate, 2-tetrahydropyranyl methylacrylate and tetrahydrofurfuryl acrylate.

6. The coating composition according to any of the preceding claims, wherein the component c) is selected from among diacrylates and dimethacrylates of aliphatic diols.

7. The use of a radiation-curable coating composition as defined in any of claims 1 to 6 for coating substrates.

8. The use according to claim 7, wherein a substrate having a surface comprising wood, plastic, paper, leather or metal is used.

9. A process for producing a coated substrate, which comprises
- applying a coated composition according to any of claims 1 to 6 to the surface of the substrate,
- if appropriate drying the applied coating composition at elevated temperatures, and
- curing the coating composition, which may, if appropriate, previously have been dried, by irradiation with UV radiation or an electron beam.

10. A coated substrate obtainable by a process according to claim 9.

## Revendications

1. Agent d'enduction durcissable par rayonnement comprenant :
a) au moins un (méth)acrylate d'uréthane aliphatique avec deux liaisons doubles éthyléniquement insaturées par molécule, qui comprend au moins un polytétrahydrofuranediol intégré avec un poids moléculaire moyen numérique Mₙ d'au moins 500 g/mol, et
b) au moins un diluant réactif monoéthyléniquement insaturé qui présente au moins un hétérocycle aliphatique comme élément structurel dans lequel la composante b) est un composé suivant la formule générale I : 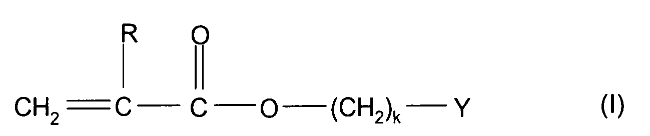 dans laquelle:
R est sélectionné parmi H et CH₃,
k est un nombre de 0 à 4, et
Y représente un hétérocycle saturé à 5 ou à 6 éléments avec un ou deux atomes d'oxygène, l'hétérocycle étant substitué le cas échéant avec un alkyle en C₁-C₄.

2. Agent d'enduction selon la revendication 1 comprenant en outre au moins un ester difonctionnel ou polyfonctionnel d'un acide carboxylique α,β-éthyléniquement insaturé avec un diol ou un polyol (= composante c).

3. Agent d'enduction selon l'une des revendications précédentes, comprenant 20 à 90% en poids de la composante a), 10 à 80% en poids de la composante b), 0 à 50% en poids de la composante c) et 50% en poids maximum, par rapport au poids total des composantes a), b) et c), de correctifs usuels, dans la mesure où les quantités en poids des composantes a), b) et c), s'additionnent pour donner 100% en poids.

4. Agent d'enduction selon l'une des revendications précédentes, comprenant, en outre, par rapport au poids total des composantes a), b) et c) :
d) 0 à 10% en poids d'au moins un photoinitiateur,
e) 0 à 5% en poids d'au moins un absorbeur d'UV,
f) 0 à 5% en poids d'au moins un capteur radicalaire et
g) 0 à 10% en poids d'additifs usuels pour des agents d'enduction.

5. Agent d'enduction selon la revendication 1, dans lequel la composante b) est sélectionnée parmi le monoformalacrylate de triméthylolpropane, le monoformalacrylate de glycérine, l'acrylate 4-tétrahydropyranyle, l'acrylate 2-tétrahydropyranylméthyle et l'acrylate de tétrahydrofurfuryle.

6. Agent d'enduction selon l'une des revendications précédentes, dans lequel la composante c) est sélectionnée parmi les diacrylates et diméthylacrylates de diols aliphatiques.

7. Utilisation d'un agent d'enduction durcissable par rayonnement, tel que défini dans l'une des revendications 1 à 6, pour l'enduction de substrats.

8. Utilisation selon la revendication 7, dans laquelle on met en oeuvre un substrat avec une surface en bois, plastique, papier, cuir ou métal.

9. Procédé pour la préparation d'un substrat enduit, dans lequel :
- on applique un agent d'enduction selon l'une des revendications 1 à 6 sur la surface du substrat,
- on sèche éventuellement l'agent d'enduction appliqué à des températures élevées, et
- l'agent d'enduction, éventuellement séché au préalable, durcit par rayonnement au moyen de rayons UV ou de rayons électroniques.

10. Substrat enduit, qui peut être obtenu par un procédé selon la revendication 9.
